# FASCICULE DE BREVET EUROPEEN

(11) **EP 0 997 329 B1**
(45) Date de publication et mention de la délivrance du brevet: **25.08.2004**
(21) Numéro de dépôt: 99121273.9
(22) Date de dépôt: 25.10.1999
(51) Int. Cl.: B60H 1/00

(54) **Dispositif de commande pour installation de chauffage**
Bedienvorrichtung für eine Heizungsanlage
Control device for a heating installation

(30) Priorité: 27.10.1998 FR 9813421
(43) Date de publication de la demande: 03.05.2000
(73) Titulaire: VALEO CLIMATISATION, 78321 La Verrière (FR)
(72) Inventeur: Lacroix, Louis, 94500 Champigny-Sur-Marne (FR)
(74) Mandataire: Lemaire, Marc

(56) Documents cités:
- FR-A- 2 423 815

## Description

L'invention concerne un dispositif de commande, notamment pour une installation de chauffage ventilation et/ou climatisation de l'habitacle d'un véhicule automobile, du type comportant un sélecteur manuel monté rotatif sur un tableau de commande et destiné à la manoeuvre d'un levier de commande, et un index se déplaçant devant une représentation synoptique dudit tableau lors de la rotation dudit sélecteur.

En général, l'index est solidaire du sélecteur, et ce dernier peut pivoter dans une plage angulaire prédéterminée. Le couple exercé manuellement sur le bouton du sélecteur doit être suffisant pour manoeuvrer le câble de transmission qui provoque les déplacements des volets d'un distributeur d'air, ce câble étant ancré sur le levier actionné par le sélecteur. La plage angulaire du sélecteur est inférieure à un tour, pour qu'il n'y ait pas de confusion dans la lecture du mode de distribution de l'air affiché par la position de l'index.

Du fait que les forces exercées par le câble pour déplacer les volets peuvent être relativement importantes, le bouton du distributeur a un diamètre conséquent pour permettre à l'opérateur d'appliquer un couple suffisant. Ce diamètre est en général supérieur à cinq centimètres et le tableau de commande est dimensionné en conséquence. De plus, le bouton du sélecteur est conformé pour permettre une bonne préhension manuelle.

Or, de plus en plus les constructeurs de véhicules imposent de faire des tableaux de commande dans un format DIN qui correspond au format actuel des autoradios. Ces tableaux de commande ont une façade de faible hauteur, ce qui conduit à utiliser un bouton de sélecteur de faible diamètre. Mais la manoeuvre du levier de commande par un bouton de sélecteur de faible diamètre portant l'index pose des problèmes en terme d'ergonomie. L'amplitude de rotation du bouton, qui est généralement limitée à 270°, implique un effort de manoeuvre important qu'il n'est pas facile de fournir avec un bouton de faible diamètre.

Une solution consiste à augmenter notablement la course angulaire du bouton de sélecteur en utilisant pour la manoeuvre du levier de commande une cinématique ayant un rapport de réduction plus important. De cette façon, on répartit l'effort de commande sur une plus grande distance ; le bouton est plus facile à manoeuvrer, mais il faut le tourner avec une amplitude angulaire plus importante. Cependant, dans ce cas le repérage de la position du système par un index en prise directe avec le bouton de commande est impossible.

L'invention s'est donné pour but de proposer un dispositif de commande du type mentionné ci-dessus, dans lequel la course angulaire du bouton de sélecteur est augmentée de façon notable afin de pouvoir utiliser un bouton de faible diamètre, tout en permettant une lecture aisée de l'indication de l'index.

L'invention atteint son but par le fait que l'index est porté par une douille coaxiale à l'axe de rotation du sélecteur, ladite douille étant reliée au levier de commande par une cinématique ayant un rapport de réduction inférieur au rapport de réduction de la cinématique reliant le sélecteur au levier de commande.

Ainsi, la course angulaire de l'index est inférieure à la course angulaire du sélecteur. En choisissant de manière judicieuse les rapports de réduction des cinématiques, on peut repartir l'effort de commande sur une distance plus grande et utiliser un bouton de sélecteur de petit diamètre, tout en limitant l'amplitude du déplacement angulaire de l'index.

De préférence, la douille présente un premier pignon et est montée rotative sur le tableau de commande,
- le sélecteur comporte un arbre traversant coaxialement la douille et présentant un deuxième pignon,
- ledit premier pignon et ledit deuxième pignon engrènent respectivement avec un premier et un deuxième secteurs dentés solidaires du levier de commande et centrés sur l'axe de pivotement dudit levier de commande, et
- les rapports de réduction entre les pignons et leurs secteurs respectifs sont calculés de telle manière que l'amplitude de pivotement de l'index est inférieure à l'amplitude du pivotement du sélecteur.

Le rapport de réduction entre le deuxième pignon et le deuxième secteur est choisi suffisamment important pour répartir l'effort de commande sur une plus grande course angulaire de sélecteur. Cette course angulaire peut être supérieure à un tour.

De préférence, le levier de commande est monté pivotant sur le tableau de bord.

Avantageusement, l'axe de pivotement du levier de commande est parallèle à l'axe de la douille. Dans ce cas, les pignons sont droits.

D'autres avantages et caractéristiques de l'invention ressortiront à la lecture de la description suivante faite à titre d'exemple et en référence aux dessins annexés dans lesquels :

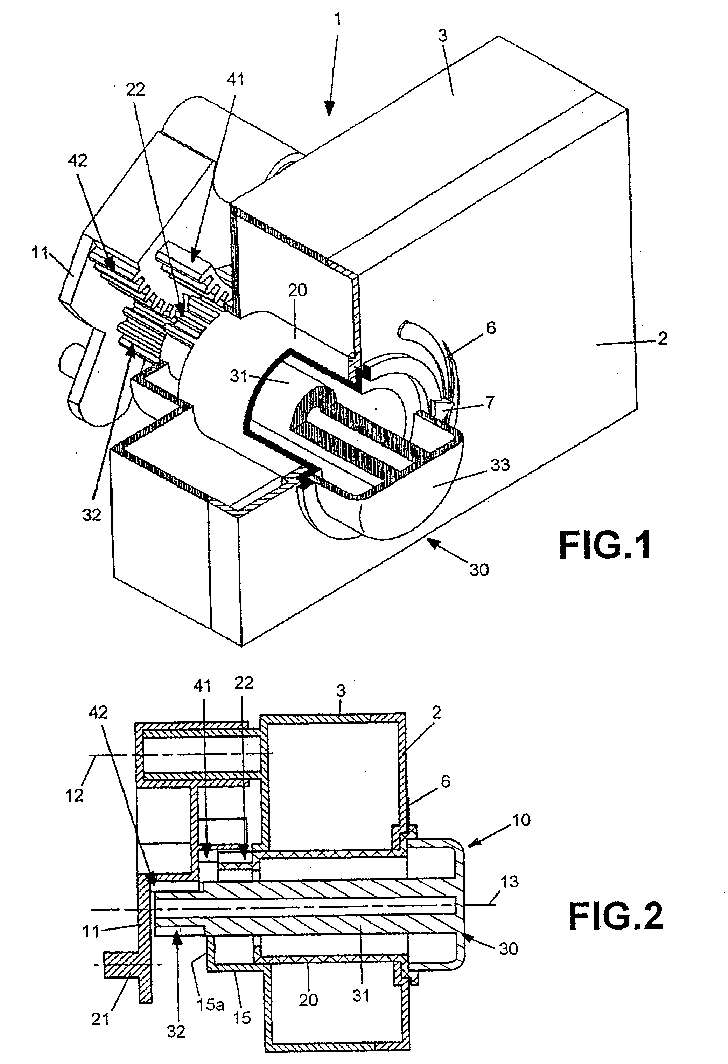

la figure 1 est une vue en perspective, partiellement arrachée, d'un dispositif de commande selon l'invention monté sur un tableau de commande d'une installation de chauffage ventilation et/ou climatisation de l'habitacle d'un véhicule automobile ;
la figure 2 est une coupe selon un plan passant par les axes de pivotement du sélecteur et du levier de commande du dispositif de la figure 1 ;

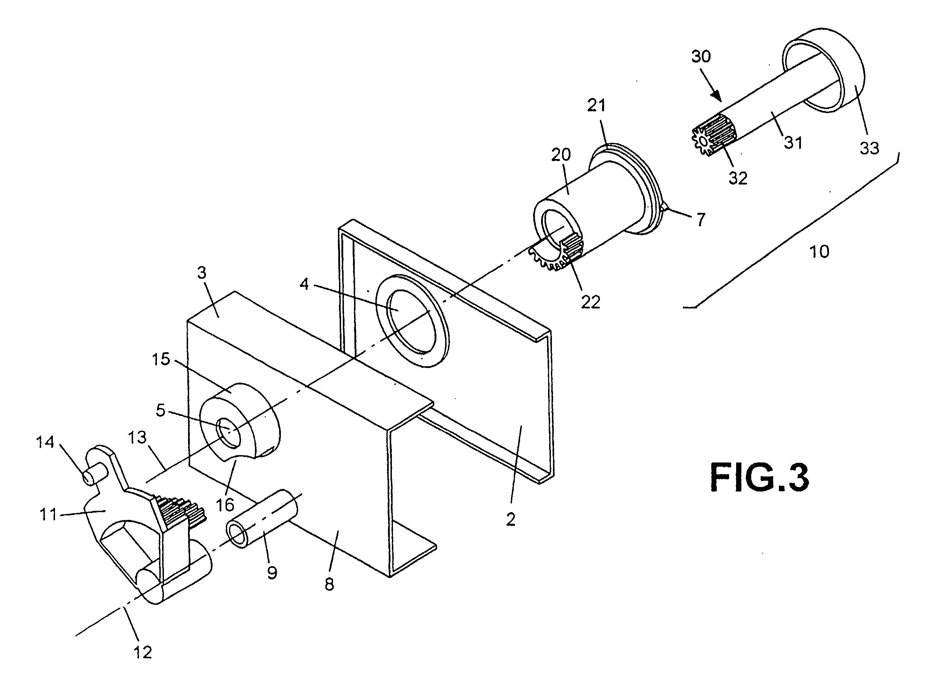

la figure 3 est une vue en perspective et éclatée du dispositif de commande de la figure 1 ; et

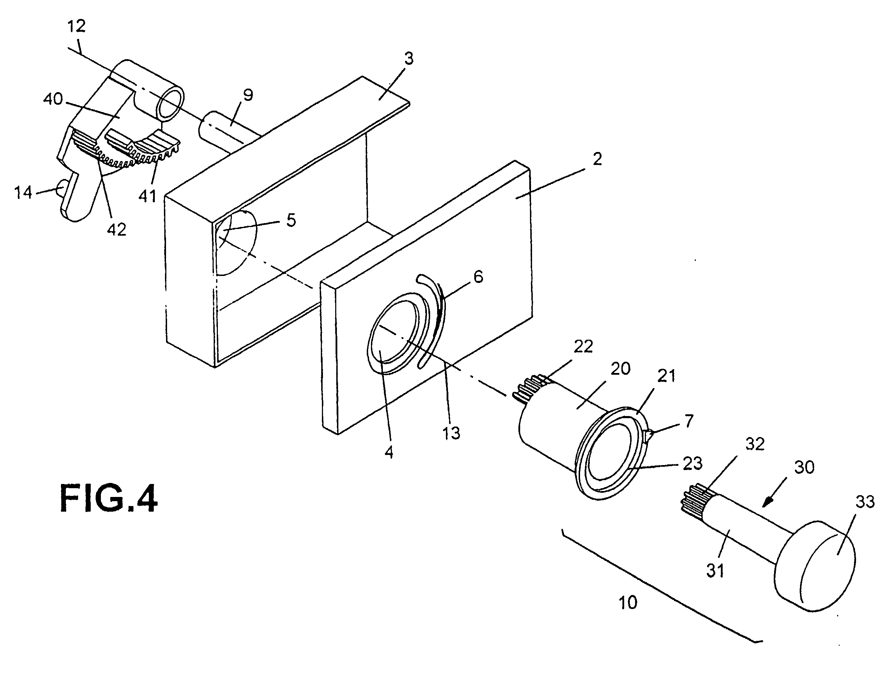

la figure 4 est une autre vue en perspective et éclatée selon un autre angle du dispositif de commande de la figure 1.

Les dessins montrent schématiquement un tableau de commande 1 d'une installation de chauffage de véhicule, comportant un panneau avant 2, obturant un boîtier 3. Le panneau 2 et le boîtier 3 comportent en vis-à-vis des orifices circulaires respectivement 4, 5 pour le montage d'un dispositif de commande 10 rotatif devant actionner un levier de commande 11.

Le panneau avant 2 présente autour de l'orifice 4 une représentation synoptique 6 réalisée par exemple par sérigraphie et devant laquelle se déplace un index 7 lors de la rotation du dispositif de commande 10. La position de l'index sur la représentation synoptique permet la lecture du mode de chauffage de l'installation.

Le boîtier 3 présente sur sa face arrière 8 un tourillon 9 ayant un axe 12 parallèle à l'axe 13 des orifices 4 et 5 et décalé par rapport à ce dernier pour le montage du levier 11, ce dernier comportant un téton 14 pour l'ancrage d'un câble de transmission de déplacements des volets d'un distributeur d'air.

L'orifice 5 est prévu sur la face d'extrémité 15a d'un manchon annulaire 15 qui s'étend sur la face 8 du boîtier 3 coaxialement à l'axe 13. Ce manchon 15 présente en regard du tourillon 9 une échancrure 16.

Le dispositif de commande 10 comporte une douille annulaire cylindrique 20, ayant un diamètre sensiblement égal au diamètre de l'orifice 4, dont une extrémité présente une collerette 21, sur laquelle est formé l'index 7, et dont l'autre extrémité comporte un premier pignon 22. La longueur de la douille 20 est calculée de telle manière que, lorsqu'elle est montée sur le tableau de commande 1, le premier pignon 22 loge dans le manchon annulaire 15 et la collerette 21 est en appui sur le pourtour de l'orifice 4. Le diamètre intérieur du manchon 15 est sensiblement égal au diamètre de l'orifice 4, afin que le premier pignon 22 qui a un diamètre extérieur égal à celui de la douille 20, puisse pivoter sans jeu excessif, autour de l'axe 13, dans le manchon 15.

Le dispositif de commande 10 comporte en outre un sélecteur rotatif 30. Ce sélecteur 30 comprend un arbre 31 dont le diamètre est sensiblement égal au diamètre de l'orifice 5. L'arbre 31 présente, à l'une de ses extrémités, un deuxième pignon 32, dont le diamètre extérieur est égal au diamètre de l'arbre 31 et, à l'autre extrémité, un bouton de manoeuvre 33 dont le diamètre est légèrement supérieur au diamètre de l'orifice 4, une partie 34 de ce bouton de manoeuvre 33 logeant dans une rainure annulaire 23, d'axe 13 ménagée dans la collerette 21.

Le diamètre de l'arbre 31 et de l'orifice 5 est inférieur au diamètre intérieur de la douille 20 et la longueur de l'arbre 31 est supérieure à la longueur de la douille 20.

L'arbre 31 s'étend coaxialement à l'axe 13 dans la douille 20. La longueur de l'arbre 31 est telle que le deuxième pignon 32 émerge sur la face d'extrémité 15a du manchon 15 lorsque le sélecteur 30 est monté sur la douille 20, cette dernière étant également montée sur le boîtier 1.

Le sélecteur 30 est maintenu coaxialement à l'axe de pivotement 13, d'une part, par la face d'extrémité 15a du manchon 15 et par la rainure 23 de la collerette 21 de la douille 20.

La douille 20 est maintenue coaxialement à l'axe de pivotement 13 par la coopération de la douille 20 avec le bord de l'orifice 4, et par le fait que le premier pignon 22 loge sans jeu excessif dans le manchon 15.

Le levier 11 présente sur sa face 40 située en regard de la face 8 du boîtier 3, un premier secteur denté 41 et un deuxième secteur denté 42 coaxiaux à son axe de pivotement 12, et décalés le long de cet axe de pivotement 12.

Le premier secteur denté 41 engrène avec le premier pignon 22 de la douille 20 à travers l'échancrure 16 du manchon 15, cette échancrure 16 étant dimensionnée en conséquence.

Le deuxième secteur denté 42 engrène avec le deuxième pignon 32 du sélecteur 30.

Le rayon du deuxième secteur denté 42 est supérieur au rayon du premier secteur denté 41, et l'écart entre ces deux rayons est égal à l'écart entre les rayons des premier et deuxième pignons 22, 32.

Le rayon du deuxième secteur denté 42 est nettement supérieur au rayon du deuxième pignon 32. Le rapport entre ces deux rayons peut être par exemple de 6. Dans ce cas, un tour de rotation du sélecteur 30 entraîne un pivotement du levier 11 d'un angle de 60°.

Si, dans ces conditions, le rayon du premier secteur denté 41 est le double de celui du premier pignon 22, un tour de rotation du sélecteur 30 entraînera un pivotement de l'index 7 autour de l'axe 13 d'un angle de 120°.

Le ratio entre l'amplitude du pivotement du sélecteur 30 et l'amplitude du pivotement de l'index 7 est alors de 3. Comme la représentation synoptique 6 s'étend sur un angle inférieur à 360°, on conçoit que le sélecteur 30 puisse pivoter sur une amplitude pouvant atteindre trois tours, avec les rapports de réduction donnés à titre d'exemple.

Le fait que le rayon du deuxième secteur denté 42 est choisi nettement supérieur au rayon du deuxième pignon 32, permet de répartir l'effort nécessaire pour manoeuvrer le câble de transmission sur un nombre de tours de sélecteur plus élevé, et de réaliser un dispositif de commande ayant un bouton de sélecteur de petit diamètre. Ceci permet de concentrer la représentation synoptique sur une faible surface de la façade du tableau de commande, ce qui présente l'avantage de réduire le coût de la décoration et de concentrer les zones à éclairer.

Les rapports de réduction peuvent être choisis de telle manière que l'index 7 ait une amplitude faible, limitée à 120° par exemple. Ceci permet de concentrer la représentation synoptique sur une faible surface de la façade du tableau de commande 1, ce qui présente également l'avantage de réduire le coût de la décoration et de concentrer les zones à éclairer.

Dans le mode de réalisation préféré décrit ci-dessus, les pignons 22 et 32 sont droits. Ces pignons pourraient éventuellement être coniques, les secteurs dentés 41 et 42 étant alors également coniques, et l'axe de pivotement 12 du levier 11 étant perpendiculaire à l'axe de rotation 13 du sélecteur 30, ce qui permet de placer le levier 11 perpendiculaire à la façade.

Dans le mode de réalisation préféré décrit ci-dessus, le levier de commande 11 est monté pivotant autour d'un axe 12. Le levier de commande 11 pourrait être remplacé par un chariot monté coulissant sur le boîtier 3 et comportant deux crémaillères coopérant avec les pignons 22 et 32.

Les chaînes cinématiques pourraient également être sur plusieurs étages et comprendre des pignons multiples en séquence.

Dans le mode de réalisation décrit ci-dessus, l'index 7 est formé sur la collerette 21 de la douille 20 et se déplace devant la représentation synoptique 6.

Il est évident que l'index 7 pourrait être fixe et formé sur le panneau avant 2, tandis que la représentation synoptique 6 serait sérigraphiée sur la collerette 21, sans sortir du cadre de protection de la présente invention.

De préférence, la douille 20 est réalisée dans un matériau translucide afin de permettre l'éclairage du bouton de manoeuvre 33 par l'éclairage direct de l'index 7. Dans ce cas, l'index 7 peut être formé par une échancrure de la collerette 21 ou par un anneaux loupe.

## Revendications

1. Dispositif de commande notamment pour une installation de chauffage ventilation et/ou climatisation de l'habitacle d'un véhicule automobile, du type comportant un sélecteur manuel (30) monté rotatif sur un tableau de commande (1) et destiné à la manoeuvre d'un levier de commande (11), et un index (7) se déplaçant devant une représentation synoptique (6) du tableau de commande (1) lors de la rotation dudit sélecteur (30),
**caractérisé par le fait que** :
- l'index (7) est porté par une douille (20) coaxiale à l'axe de rotation du sélecteur (30), ladite douille (20) étant reliée au levier de commande (11) par une cinématique ayant un rapport de réduction inférieur au rapport de réduction de la cinématique reliant le sélecteur (30) au levier de commande (11).

2. Dispositif selon la revendication 1, **caractérisé par le fait que** la douille (20) présente un premier pignon (22) et est montée rotative sur le tableau de commande (1),
- le sélecteur (30) comporte un arbre (31) traversant coaxialement la douille (20) et présentant un deuxième pignon (32),
- ledit premier pignon (22) et ledit deuxième pignon (32) engrènent respectivement avec un premier (41) et un deuxième (42) secteurs dentés solidaires du levier de commande (11) et centrés sur l'axe de pivotement (12) dudit levier de commande (11), et
- les rapports de réduction entre les pignons (22, 32) et leurs secteurs (41, 42) respectifs sont calculés de telle manière que l'amplitude de pivotement de l'index (7) est inférieure à l'amplitude du pivotement du sélecteur (30).

3. Dispositif selon la revendication 2, **caractérisé par le fait que** le levier de commande (11) est monté pivotant sur le tableau de commande (1).

4. Dispositif selon la revendication 3, **caractérisé par le fait que** l'axe de pivotement (12) du levier de commande (11) est parallèle à l'axe de pivotement (13) de la douille (20).

5. Dispositif selon la revendication 3, **caractérisé par le fait que** l'axe de pivotement (12) du levier de commande (11) est perpendiculaire à l'axe de rotation (13) du sélecteur (30).

6. Dispositif selon l'une quelconque des revendications 1 à 5, **caractérisé par le fait que** l'amplitude de pivotement de la douille est limitée à 120° par tour de rotation du sélecteur (30).

## Patentansprüche

1. Steuervorrichtung, insbesondere für eine Heizanlage mit Belüftung und/oder Klimatisierung des Innenraums eines Kraftfahrzeugs, von der Art, die einen Handwähler (30), der drehbar auf eine Schalttafel (1) montiert und zur Betätigung eines Steuerhebels (11) bestimmt ist, und einen Zeiger (7) aufweist, der sich bei der Drehung des Wählers (30) vor einer synoptischen Anzeige (6) der Schalttafel (1) bewegt, **dadurch gekennzeichnet, dass**:
- der Zeiger (7) von einer Buchse (20) getragen wird, die koaxial zur Drehachse des Wählers (30) liegt, wobei die Buchse (20) mit dem Steuerhebel (11) über eine Kinematik verbunden ist, die ein Untersetzungsverhältnis aufweist, das geringer ist als das Untersetzungsverhältnis der Kinematik, die den Wähler (30) mit dem Steuerhebel (11) verbindet.

2. Vorrichtung nach Anspruch 1, **dadurch gekennzeichnet, dass**
- die Buchse (20) ein erstes Ritzel (22) aufweist und drehbar auf die Schalttafel (1) montiert ist,
- der Wähler (30) eine Welle (31) aufweist, die die Buchse (20) koaxial durchquert und ein zweites Ritzel (32) aufweist,
- das erste Ritzel (22) und das zweite Ritzel (32) in einen ersten (41) bzw. einen zweiten Zahnsektor (42) eingreifen, die fest mit dem Steuerhebel (11) verbunden und auf die Schwenkachse (12) des Steuerhebels (11) zentriert sind, und
- die Untersetzungsverhältnisse zwischen den Ritzeln (22, 32) und ihren Sektoren (41, 42) so berechnet sind, dass die Schwenkweite des Zeigers (7) geringer ist als die Schwenkweite des Wählers (30).

3. Vorrichtung nach Anspruch 2, **dadurch gekennzeichnet, dass** der Steuerhebel (11) schwenkbar auf die Schalttafel (1) montiert ist.

4. Vorrichtung nach Anspruch 3, **dadurch gekennzeichnet, dass** die Schwenkachse (12) des Steuerhebels (11) parallel zur Schwenkachse (13) der Buchse (20) liegt.

5. Vorrichtung nach Anspruch 3, **dadurch gekennzeichnet, dass** die Schwenkachse (12) des Steuerhebels (11) senkrecht zur Drehachse (13) des Wählers (30) liegt.

6. Vorrichtung nach einem der Ansprüche 1 bis 5, **dadurch gekennzeichnet, dass** die Schwenkweite der Buchse pro Drehbewegung des Wählers (30) auf 120° begrenzt ist.

## Claims

1. Control device, especially for a ventilation and/or air-conditioning heating system of the passenger compartment of a motor vehicle, of the type comprising a manual selector (30) mounted in rotary arrangement on a control panel (1) and intended for the manoeuvring of a control lever (11), and a pointer (7) moving in front of a synoptic representation (6) of the control panel (1) upon the rotation of the said selector (30),
**characterized in that**:
- the pointer (7) is borne by a sleeve (20) coaxial to the rotational axis of the selector (30), the said sleeve (20) being connected to the control lever (11) by a kinematic mechanism having a reduction ratio less than the reduction ratio of the kinematic mechanism connecting the selector (30) to the control lever (11).

2. Device according to Claim 1, **characterized in that** the sleeve (20) has a first pinion (22) and is mounted in rotary arrangement on the control panel (1),
- the selector (30) comprises a shaft (31) passing coaxially through the sleeve (20) and having a second pinion (32),
- the said first pinion (22) and the said second pinion (32) mate respectively with a first (41) and a second (42) toothed segment fixedly connected to the control lever (11) and centred on the pivot axis (12) of the said control lever (11), and
- the reduction ratios between the pinions (22, 32) and their respective segments (41, 42) are calculated such that the pivot amplitude of the pointer (7) is less than the pivot attitude of the selector (30).

3. Device according to Claim 2, **characterized in that** the control lever (11) is mounted pivotably on the control panel (1).

4. Device according to Claim 3, **characterized in that** the pivot axis (12) of the control lever (11) is parallel to the pivot axis (13) of the sleeve (20).

5. Device according to Claim 3, **characterized in that** the pivot axis (12) of the control lever (11) is perpendicular to the rotational axis (13) of the selector (30).

6. Device according to any one of Claims 1 to 5, **characterized in that** the pivot amplitude of the sleeve is limited to 120° per rotation turn of the selector (30).
